(19) **Europäisches Patentamt** / **European Patent Office** / **Office européen des brevets**

(11) **EP 1 860 312 B1**

(12) **EUROPEAN PATENT SPECIFICATION**

(45) Date of publication and mention of the grant of the patent:
**18.03.2009 Bulletin 2009/12**

(51) Int Cl.:
*F02D 41/20* (2006.01)          *F02M 51/06* (2006.01)
*F02M 65/00* (2006.01)

(21) Application number: **07252101.6**

(22) Date of filing: **22.05.2007**

(54) **A Method of operating a fuel injector**

Verfahren zum Betrieb einer Kraftstoffeinspritzdüse

Procédé de fonctionnement d'un injecteur à carburant

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **23.05.2006 GB 0610232**
**30.08.2006 EP 06254516**

(43) Date of publication of application:
**28.11.2007 Bulletin 2007/48**

(73) Proprietor: **Delphi Technologies, Inc.**
**Troy, Michigan 48007 (US)**

(72) Inventor: **Hopley, Daniel J.**
**Chislehurst, Kent, BR7 5EG (GB)**

(74) Representative: **Gregory, John David Charles et al**
**Delphi Diesel Systems**
**Patent Department**
**Courteney Road**
**Gillingham**
**Kent ME8 0RU (GB)**

(56) References cited:
**EP-A1- 1 167 729          WO-A-01/63121**
**WO-A-20/05026516          DE-A1- 10 024 662**
**DE-A1-9102004 037 71      US-A1- 2005 022 793**
**US-A1- 2005 252 494**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Technical Field

The invention reiaies to a method of operating a fuei injector. More specifically, the invention relates to a method of operating a piezoelectrically actuated fuel injector in order to improve combustion efficiency.

Background to the Invention

In an internal combustion engine, it is known to deliver fuel into cylinders of the engine by means of a fuel injector associated with each cylinder. One such type of fuel injector that permits precise metering of fuel is a so-called 'piezoelectric injector'.

Typically, a piezoelectric injector includes a piezoelectric actuator that is operable to control an injection nozzle. The injection nozzle houses an injector valve needle which is movable relative to a valve needle seat under the control of the actuator. A hydraulic amplifier is situated between the actuator and the needle such that axial movement of the actuator causes an amplified axial movement of the needle. Depending on the voltage applied to the piezoelectric actuator, the valve needle is either caused to disengage the valve seat, in which case fuel is delivered into the associated engine cylinder through a set of outlets provided in a tip of the nozzle, or is caused to engage the valve seat, in which case fuel delivery is prevented.

An injector drive voltage is applied to the actuator to control an injection event comprising one or more pilot injections, a main injection, and one or more post injections depending on an operating strategy which controls the volume and timing of fuel delivery in accordance with the engine demands. The injector drive voltage is controlled by an engine control unit.

It has been observed that, using current engine control methods, some injections may adversely effect subsequent injections of a comparable or smaller size. A pilot injection may affect subsequent pilot injections, a main injection may affect a first post injection, or a post injection may affect subsequent post injections. This is caused by the first injection setting up pressure variations within the nozzle.

For example, an injector drive voltage may comprise first and second pilot pulses and a single main injection pulse. If the magnitude and duration of the first pilot pulse are substantially equal to the magnitude and duration of the second pilot pulse, the resultant delivery rate for each pilot injection is substantially equal. Thus, the volume of fuel delivered by each pilot injection should ideally be equal.

However, it has now been observed that varying the temporal separation of the voltage pulses for the first and second pilot injections results in a variation in delivery volume, even when the same delivery volume is demanded. The purpose of a pilot injection is to deliver a precise amount of fuel into the combustion chamber prior to the main injection in order to initiate the combustion process gradually. A variation in fuel delivery volume between pilot injections is undesirable since it reduces the controllability of the combustion process. Therefore, a method of regulating the volume of fuel delivered between pilot injections is required.

For further information regarding a known injection valve and control method, the reader is directed to DE-A-10024662.

Summary of the Invention

According to a first aspect of the invention, a method for controlling the volume of fuel delivered during an injection by a piezoelectrically actuated fuel injector comprising a stack of piezoelectric elements, comprises driving a current through the stack for an injector opening phase to initiate the injection, and measuring a change in voltage across the stack over an injector dwell phase during which the injector is injecting. The method further includes adjusting an injection control parameter for at least one subsequent injection on the basis of the measured change in voltage in order to ensure a correct volume of fuel is delivered during the at least one subsequent injection.

The method advantageously regulates the volume of fuel delivered in order to improve the controllability of the combustion process.

In a preferred embodiment, the method includes adjusting the injection control parameter after a preceding injection of comparable or larger injected volume.

If an initial (preceding) injection has a comparable or larger injected fuel delivery volume compared with a subsequent injection, the subsequent injection may be affected by the preceding injection. By adjusting the injection control parameter to take account of the effects of the preceding injection, the accuracy of fuel volume delivery is improved.

By way of example, the method may include adjusting the injection control parameter for a second pilot injection following a first pilot injection and preceding a main injection. In another example, the method includes adjusting the injection control parameter for a post injection foiiowing a main injection or a preceding post injection.

Preferably, adjusting the injection control parameter includes applying a correction factor to a predetermined injection control parameter.

In one embodiment, for example, the method may include determining the correction factor (e.g. using one or more look-up tables and/or data maps) on the basis of a calculated change in fuel volume delivery. This method may further comprise calculating the change in fuel volume delivery (e.g. using one or more look-up tables and/or data maps) on the basis of the measured change in voltage across the stack.

In one embodiment, the method includes determining an injector on time comprising the opening phase and the dwell phase, wherein the step of adjusting the injection control parameter includes adjusting the injector on time for the at least one subsequent injection on the basis of the measured change in voltage.

In another embodiment, the injection control parameter may be the dwell time.

In a still further embodiment, the injection control parameter may be the current that is driven through the stack for the injector opening phase.

The method may further comprise selecting an operating strategy from a plurality of operating strategies on the basis of one or more engine operating conditions and performing the aforementioned steps of the invention each time a new operating strategy is selected.

Preferably, the method includes monitoring the one or more engine operating conditions, and selecting a new operating strategy from the plurality of operating strategies on the basis of changes in the one or more engine operating conditions.

For example, the one or more engine operating conditions may include at least one of torque, speed and fuel pressure.

The method may include driving the injector by applying a discharge current to the stack to cause the injection of fuel, and applying a charge current to the stack in order to cease the injection of fuel. Alternatively, the method may include driving the injector by applying a charge current to the stack to cause the injection of fuel, and applying a discharge current to the stack in order to cease the injection of fuel.

Other aspects of the invention relate to a computer program product comprising at least one computer program software portion which, when executed in an executing environment, is operable to implement the method of the first aspect of the invention, a data storage medium having the or each said computer software portion stored thereon, and a microcomputer provided with said data storage medium.

According to a still further aspect of the invention, there is provided a controller for a stack of a piezoelectric actuator for use in a fuel injector, comprising means for driving a current through the stack for an injector opening phase, means for measuring a change in voltage across the stack over a dwell phase during which the injector is injecting, and means for adjusting an injection control parameter for at least one subsequent injection on the basis of the measured change in voltage in order to ensure a correct volume of fuel is delivered during the at least one subsequent injection.

It will be appreciated that any of the steps of the method of the first aspect of the invention may be implemented within a controller of the further aspect of the invention, alone or in appropriate combination.

Preferred embodiments of the invention will now be described, by way of example only, with reference to the accompanying drawings in which:

Brief Description of Drawings

Figure 1     shows a torque-speed curve for an engine and illustrates a number of pressure bars,

Figure 2a     shows an injector drive voltage signal for an injection event comprising voltage pulses for a first pilot injection, a second pilot injection and a main injection,

Figure 2b     shows the ideal fuel delivery volume waveform resulting from the drive voltage signal of Figure 2a,

Figure 2c     shows an example of a fuel volume delivery waveform, which may result in response to the drive voltage signal of Figure 2a,

Figure 3     shows the variation in fuel delivery volume as a function of the temporal separation of the voltage pulses for the first and second pilot injections,

Figure 4     is a graph of the change in actuator voltage against pilot pulse separation for a dwell phase (dwell period) between the end of an opening phase and the start of a closing phase,

Figure 5a     is a voltage discharge profile of the first and second pilot injections separated by a first predetermined time interval,

Figure 5b     shows the "injector on time" TON associated with the voltage discharge profile of Figure 5a,

Figure 5c     shows a fuel volume delivery waveform associated with the voltage discharge profile of Figure 5a,

Figure 6     shows the linear relationship between change in fuel volume delivered and change in voltage over the dwell period,

Figure 7     shows graphs for fuel volume delivered versus an "injector on time" TON for a number of different fuel pressures, and

Figure 8     is a flow chart illustrating a control method according to an embodiment of the invention.

Detailed Description of Preferred Embodiments

For the purpose of the following description, an injection event shall be taken to comprise one or more pilot injections, a main injection, and one or more post injections. An engine control unit, which is associated with all of the injectors of the engine, determines an operating strategy which needs to be implemented in order to deliver the engine performance as demanded by a driver. An injection includes an opening phase, a dwell phase and a closing phase. The dwell phase lasts for a dwell period, $t_{dwell}$, which is the time between the end of the opening phase and the start of the closing phase.

During an injection, the piezoelectric actuator controls movement of the injector valve needle in order to deliver fuel into the cylinder. The piezoelectric actuator is effectively a 'stack' of piezoelectric material which, when operating in an 'actuating mode', expands and contracts depending upon the voltage across it. It is known to situate the stack in a chamber of pressurised fuel (referred to as the stack chamber). The stack chamber itself forms a part of the supply passage between the injector inlet and the nozzle outlets. One injector of the type in which the stack is located within a fuel volume is described in the Applicant's granted patent number EP 0995901.

The injector is driven by charging the stack to different energisation levels by driving a current into or out of the stack for a given time. This results in the voltage across the stack changing and charge transfer to or from the stack. The amount of charge transferred to or from the stack determines the extent of movement of the stack, which in turn dictates the extent of lift of the injector valve needle.

When situated in a chamber of pressurised fuel, the stack, under equilibrium conditions, is referred to as being hydrostatically loaded (i.e. there is equal pressure on all sides), and in this state does not produce a change in voltage across it. The piezoelectric material responds to distortions in its crystal structure in order to produce a change in the voltage across the stack. For example, an increase in the voltage across the stack can be attributed to either an increase in axial pressure or a reduction in the pressure along the length of the stack.

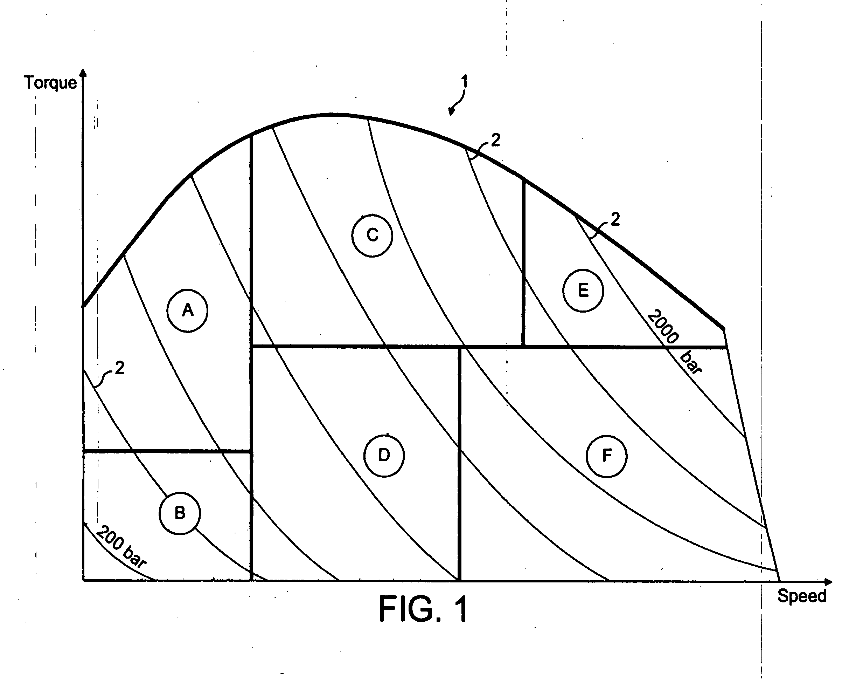

Figure 1 shows a torque-speed curve 1 for an engine, including fuel pressure bars 2. The torque-speed curve 1 is split into different areas A, B, C, D, E, and F defining various operating strategies. Each of the different strategies corresponds to a different injection event. For example, strategy A may include one pilot injection, a main injection and a post injection while strategy B may include two pilot injections, a main injection and one post injection. The operating strategy also determines the timing of all of the injections, usually in reference to top dead centre (TDC). Top dead centre is a reference to the cylinder piston position associated with an injector. Combustion occurs at or around TDC once fuel is injected into the cylinder. Figure 1 is only an illustration and the torque-speed curve 1 may be split into far more operating strategies in practice.

The engine control unit determines, for a required torque, speed and fuel pressure, the operating strategy, A, B, C, D, E or F, in which the engine control unit must operate to ensure the desired engine performance. The operating strategy determines the number and type of injections within each injection event, as well as the timing between each injection of the event.

Changes between operating in one operating strategy (i.e. an injection event sequence having a specific injector drive waveform) and another typically occur over a long period of time in comparison to the length of the injection event sequences themselves. As a result, an injection event sequence associated with one operating strategy will occur many times before conditions change and a different injection event sequence is required.

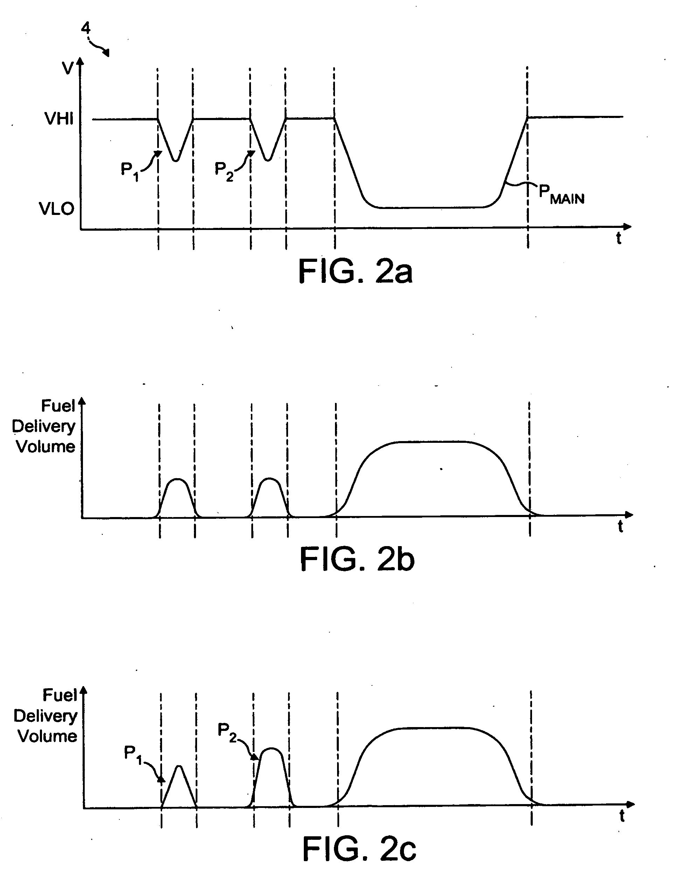

An example injection event showing an injector drive voltage that may be applied to an injector actuator is shown in Figure 2a. The injector drive voltage is applied by means of the engine control unit. The drive voltage 4 transitions from a relatively high voltage, $V_0$, at which no fuel delivery occurs, to a relatively low voltage, $V_1$, which initiates fuel delivery. An injector responsive to this drive voltage is referred to as a 'de-energise to inject' injector because, as a result of the voltage across the injector decreasing, an injection occurs. A corresponding ideal delivery rate profile is shown in Figure 2b.

In Figure 2a, the injector drive voltage 4 comprises first and second pilot pulses, P1 and P2, and a single main injection pulse, $P_{main}$. The magnitude and duration of the first pilot pulse, P1, are substantially equal to the magnitude and duration of the second pilot pulse, P2. Accordingly, the delivery rate for each pilot injection is substantially equal and, thus, the volume of fuel delivered by each pilot injection (the area under the curve) should ideally be equal, as shown in Figure 2b.

Figure 2c shows a realistic delivery rate profile in which the fuel delivered during the second pilot injection, P2, is greater than the fuel delivered during the first pilot injection, P1, regardless of the fact that the drive pulse for the second pilot injection, P2, has the same magnitude and duration as for the first pilot injection, P1.

There are two effects within the injector which, either separately or in combination, can be attributed to variations in the volume of fuel delivered during second and subsequent injections of an injection event sequence.

The first effect is due to the movement of the valve needle from start to end of the first pilot injection, P1, initiating a pressure wave which travels through the internal fuel passages of the injector before being reflected back down to the tip of the nozzle. The pressure wave oscillates up and down the internal fuel passages at a particular frequency and in turn this alters the pressure along the length of the stack. When the pressure wave travels towards the tip of the nozzle, a high pressure wave is set up such that if the needle is again caused to lift from the valve seat before the wave has dissipated there is an increase in the fuel volume delivered through the nozzle outlets. Conversely, when the pressure wave travels away from the tip of the nozzle, a low pressure wave is set up, such that if the needle is again caused to lift from the valve seat before the wave has dissipated there is a decrease in the fuel volume delivered through the nozzle outlets. As a result, the actual fuel volume delivered between pilot injections for the same drive voltage varies considerably, depending upon the temporal separation of the pilot injections.

Fuel delivery of the second pilot injection in Figure 2c could equally have been reduced had the injector valve been caused to lift from its seat at a time when the pressure within the internal fuel passages had been low. As a result, the pressure within the internal fuel passages has a direct effect on the variation in fuel delivery, which is undesirable.

The second effect is due to the vibrations within the nozzle and needle. During the first pilot injection the needle disengages and re-engages with the valve seat. When the needle disengages from the valve seat, the needle is caused to vibrate in an axial direction. When the needle re-engages with the seat, it is still vibrating and as a result also causes the nozzle to vibrate. The degree to which the needle lifts during pilot injections (or any injection where only a relatively small volume of fuel is to be delivered) is critical. Depending upon the temporal separation of the first and second pilot injections, P1 and P2, the needle lift is caused to vary because of these vibrations, and as a result the volume of fuel delivery also varies.

For example, if, for the second pilot injection, the needle is caused to disengage from the valve seat while the vibration is causing the needle to move in a direction away from the seat, then during the second pilot injection, P2, the needle lift will be higher than if there had been no vibration. As a result, the effective aperture (s) through which fuel is delivered is larger than if there had been no vibration (as in the case of the first pilot injection, P1), and a larger volume of fuel is delivered. Conversely if, for the second pilot injection, the needle is caused to disengage from the valve seat while the vibration is causing the needle to move in a direction towards the seat, then, during the second pilot injection, P2, the needle lift will be lower than if there had been no vibration. As a result, the aperture(s) through which fuel is delivered is smaller, and a smaller volume of fuel is delivered. The vibrations within the needle and nozzle also have a direct effect on the variation in fuel delivery and this is undesirable.

As described above, variations in the temporal separation of the pilot injections cause variations in the volume of fuel delivered during the second pilot injection, P2, and this can be attributed to either or both of the aforedescribed pressure waves or needle lift variations. However, the piezoelectric stack, being immersed in high pressure fuel within the stack chamber, is also affected by the pressure waves and needle lift variations.

When the actuator is not operating in the actuating mode, i.e. when no charge is being applied or removed from the stack, i.e. during the dwell period, the actuator effectively operates in a 'sensing mode' in which a voltage is produced by the stack in response to the variations in pressure. As described above, the stack is sensitive to variations in axial pressure and also variations in pressure along the length of the stack. With regard to the pressure waves within the internal fuel passages, when there is a high pressure wave at the tip of the nozzle there is a low pressure wave at the stack. This is equivalent to a reduction in pressure along the length of the stack which, as described above, causes an increase in the voltage across the stack. Conversely, low pressure at the tip of the nozzle results in an increase in pressure along the length of the stack and a decrease in the voltage across the stack in comparison to an expected nominal voltage increase, $\Delta V_{nominal}$, which is described in more detail later.

Similarly, with regard to the needle lift variations caused by the vibrations, when the needle lift is higher than it would be if there were no vibrations, the needle exerts increased axial pressure on the stack (by way of the hydraulic amplifier). As described above, an increase in axial pressure results in an increase in the voltage across the stack. Conversely, low axial pressure results in a decrease in the voltage across the stack in comparison to the expected nominal voltage increase, $\Delta V_{nominal}$.

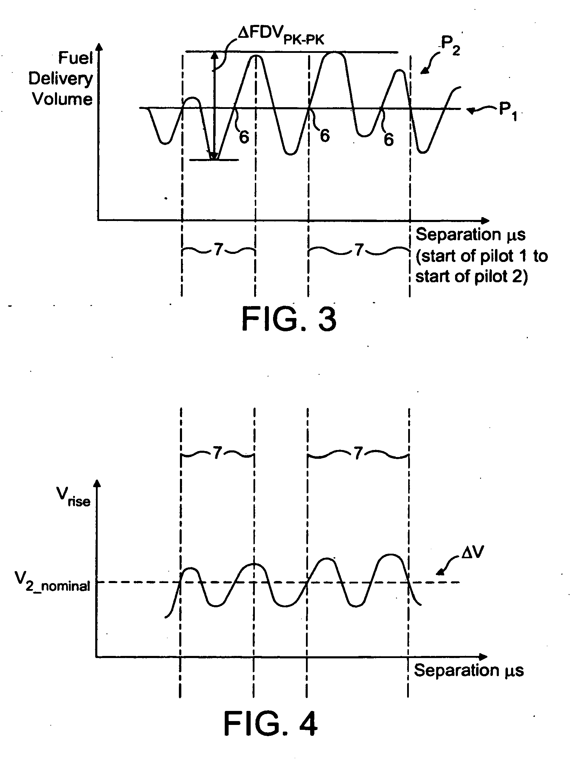

Figure 3 shows the effect of varying the temporal separation of the voltage pulses for the first and second pilot injections, P1 and P2. As shown, varying the time between the pilot injections has no effect on the fuel delivery volume of the first pilot injection, P1, since no pressure wave has been set up as a result of a previous injection pulse (the fuel pressure can be considered as being in a steady state condition), and the needle is not vibrating as a result of previous injections. However, there is a cyclical variation in the fuel delivery volume for the second pilot injection, P2, which corresponds to the pressure wave oscillating back and forth through the fuel passages, and the vibrations within the needle and nozzle causing variations in needle lift. Figure 3 shows the peak-to-peak variation in fuel delivery volume, $\Delta FDVpk$-pk.

The perceived effect of the pressure waves and needle lift variations as a result of varying the temporal separation between pilot injections, P1 and P2, is shown in Figure 4, which is a graph of change in actuator voltage, $\Delta V$, during the dwell period, $t_{dwell}$, versus the temporal separation between the pilot injections, P1 and P2. As shown, the actuator voltage measured during the dwell period, $t_{dwell}$, varies as the separation between the pilot injections is increased. The relationship between the change in actuator voltage, $\Delta V$, and the injection separation is substantially sinusoidal and, by comparing Figure 4 with Figure 3, it can be seen that both waveforms have substantially the same frequency and phase. Reference numeral 7 in particular shows that the peaks and troughs of Figures 3 and 4 coincide.

Without being bound by theory, the present invention is borne from the inventor's realisation that a change in voltage across the stack, which is not in response to the drive voltage, is indicative of a variation in fuel pressure along the length of the stack and/or a variation in axial pressure on the stack. These variations either separately or in combination cause an unwanted variation in fuel delivery. The perceived change in voltage can be used to adjust the drive voltage of the second pilot injection P2 in order to remove or alleviate the variation in fuel delivery.

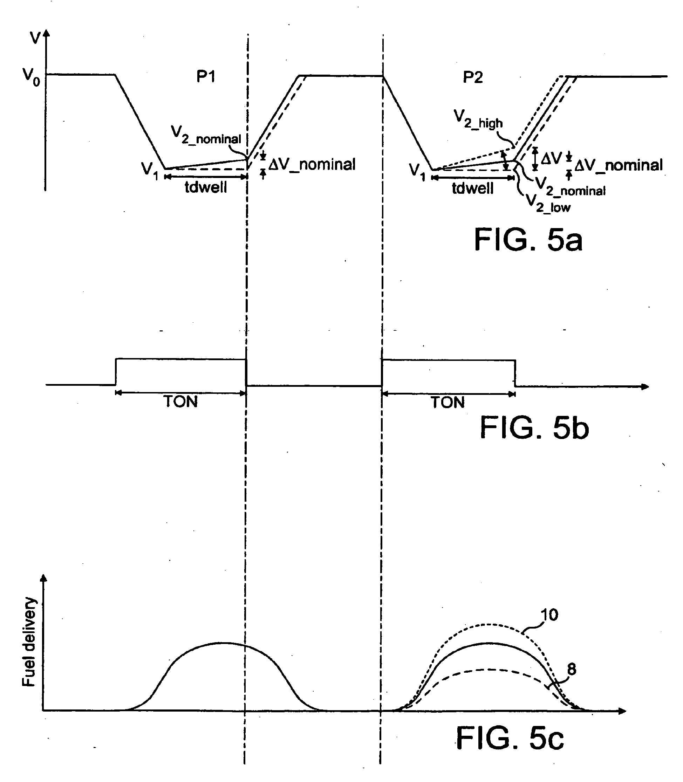

Figure 5a shows a voltage profile for the first and second pilot injections, P1 and P2. As shown, for the first pilot injection, P1, the actuator voltage decreases from a high voltage level, $V_0$, to a low voltage level, $V_1$, during the discharge/opening phase. During the dwell period, $t_{dwell}$, of the first pilot injection, P1, the voltage increases slightly from $V_1$ to $V_{2\_nominal}$.

The discharge/opening phase and the dwell period, $t_{dwell}$, together correspond to an injector on time, TON, as shown in Figure 5b. The injector on time, TON, is a control parameter for the injector, which is determined by the engine control unit (ECU), and is a function of fuel pressure. The injector on time, TON, is controlled by the ECU in order to ensure that the correct volume of fuel is delivered.

After the dwell period $t_{dwell}$, the voltage subsequently increases back to $V_0$ during a charging/closing phase prior to the second pilot injection, P2, in which the voltage decreases again to $V_1$. During the dwell phase of the second pilot injection the voltage across the stack increases to a voltage between $V_{2\_low}$ and $V_{2\_high}$. If the voltage increases to $V_{2\_nominal}$, the fuel delivery volume during the second pilot injection, P2, will equal the fuel volume during the first pilot injection, P1(i.e. the desired volume of fuel will be delivered). This corresponds, as shown in Figure 3, to where the waveform for the second pilot injection, P2, crosses the waveform for the first pilot injection, P1, at reference 6 (i.e. where delivered fuel volumes are equal). In other words, when the separation between pilot injections is chosen to be of one particular duration, it happens that the volume of fuel delivered during the second pilot injection, P2, equals the volume delivered during the first pilot injection, P1 (i.e. the desired fuel volume is delivered). However, at other separation durations the volume of fuel delivered during the second pilot injection, P2, can be significantly different from the desired amount.

A nominal voltage increase, $\Delta V_{nominal}$, is typical for both the first and second pilot injections, P1 and P2. This is the voltage increase which results in the desired volume of fuel being delivered, again corresponding to where the waveform for the first pilot injection, P1, intersects the waveform for the second-pilot injection, P2, in Figure 3.

However, during the dwell period, $t_{dwell}$, of the second pilot injection, P2, the pressure variations described above cause a voltage change either greater or smaller than the nominal voltage, $V_{2-nominal}$. A voltage increase smaller than the nominal voltage increase, $\Delta V_{nominal}$ (i.e. between $V_{2\_low}$ and $V_{2\_nominal}$) is indicative of low pressure at the tip of the nozzle and/or low needle lift causing a decrease in the fuel delivery volume, as shown by the long dashed line 8 in Figure 5c, and a voltage increase larger than the nominal voltage increase $\Delta V_{nominal}$ (i.e. between $V_{2\_nominal}$ and $V_{2\_high}$) is indicative of high pressure at the tip of the nozzle and/or high needle lift causing an increase in the fuel delivery volume, as shown by the short dashed line 10 in Figure 5c.

The invention provides a method for compensating for such a variation between the desired volume of fuel to be delivered and the actual volume of fuel delivered by compensating for the effects of the pressure waves and needle lift variations that are setup as a result of an earlier injection.

As described above, the relationship between the change in voltage, $\Delta V$, and the pilot injection separation shown in Figure 3 has the same frequency and phase as the change in fuel volume delivery, $\Delta del$, shown in Figure 4. Therefore, it can be said that the change in fuel volume delivery, $\Delta del$, varies as a function of the change in voltage, $\Delta V$. The function itself is not important to the control method since during testing of the injector, data is mapped into look-up tables or data maps and this data is then accessed real-time to apply the appropriate correction.

As an example, supposing that the relationship between the change in voltage, $\Delta V$, and the resultant change in fuel volume delivery, $\Delta del$, is considered to be substantially linear then the relationship would be given by the equation:

$$\Delta del = \phi . \Delta V + \psi$$

where $\phi$ and $\psi$ are constants

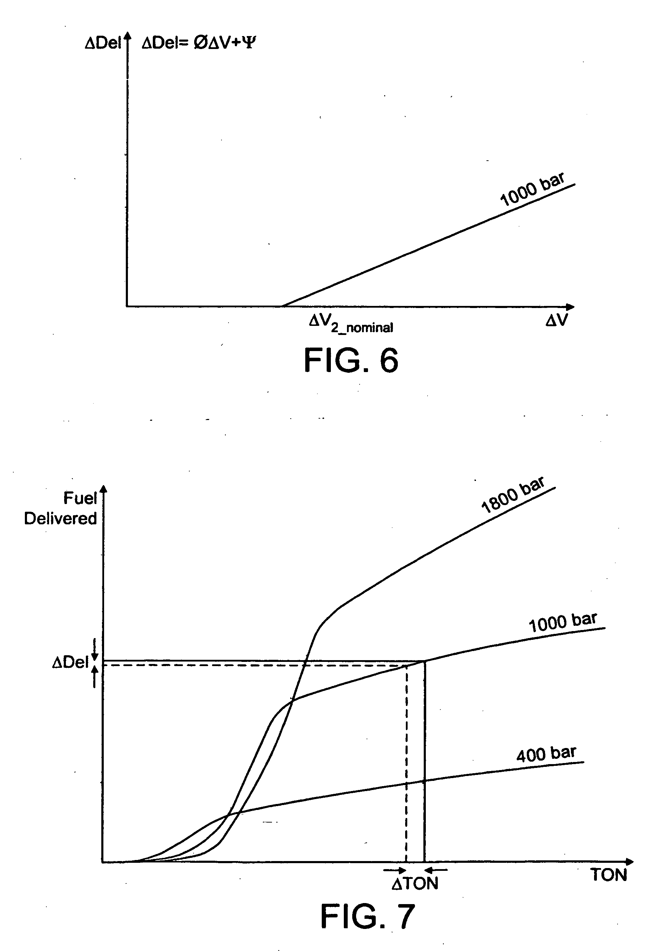

Figure 6 shows this relationship graphically for a particular fuel pressure, in this case 1000 bar. This graph will vary for different fuel pressures, injector on times TONs, and stack temperatures. During testing values for $\phi$ and $\psi$ are deduced and stored in look-up tables or data maps for a range of fuel pressures and stack temperatures. As a result, the change in fuel volume delivery, $\Delta del$, resulting from a change in voltage, $\Delta V$, can be derived from the look-up tables or data maps, in accordance with the above equation, depending on rail pressure and stack temperature.

Alternatively, values for the change in fuel volume delivery, $\Delta del$, can be stored directly in look-up tables or data maps for a range of changes in voltage, $\Delta V$, measured during testing.

Figure 7 shows the relationship between the volume of fuel delivered and the injector on time, TON, at different fuel pressures. Data corresponding to these graphs is also stored in look-up tables or data maps. The change in fuel volume delivery, $\Delta del$, determined above is used to determine a required change in the injector on time, TON, (i.e. the injector on time calculated to deliver the desired volume of fuel is adjusted by $\Delta TON$ to ensure consistent fuel delivery).

It is worth noting that there is a delay of one injection event before the corrected injector on time, TON, can be implemented to correct the fuel volume delivery error. In other words, the error in fuel delivery has to occur once in order for the change in voltage, $\Delta V$, during the second pilot injection, P2, to occur. This change in voltage, $\Delta V$, is then used to calculate the required change in injector on time, ΔTON, which is then applied to all subsequent injection events of this nature operating with the same operating strategy (i.e. the adjustment to the injector on time that is calculated for a second pilot injection is applied to the second pilot injection in a subsequent injection event sequence). As changes in operating strategy occur over a much longer time scale than the injection events themselves, the error associated with one occurrence of an injection event with an erroneous fuel delivery is negligible.

The present invention advantageously ensures that the volume of fuel delivered is consistent. Furthermore, combustion efficiency is improved due to the greater degree of control that is provided over the volume of fuel delivered.

It is to be appreciated that although the above description relates to an operating strategy which has two pilot injections, the invention need not be limited to pilot injections as will be understood from the example below.

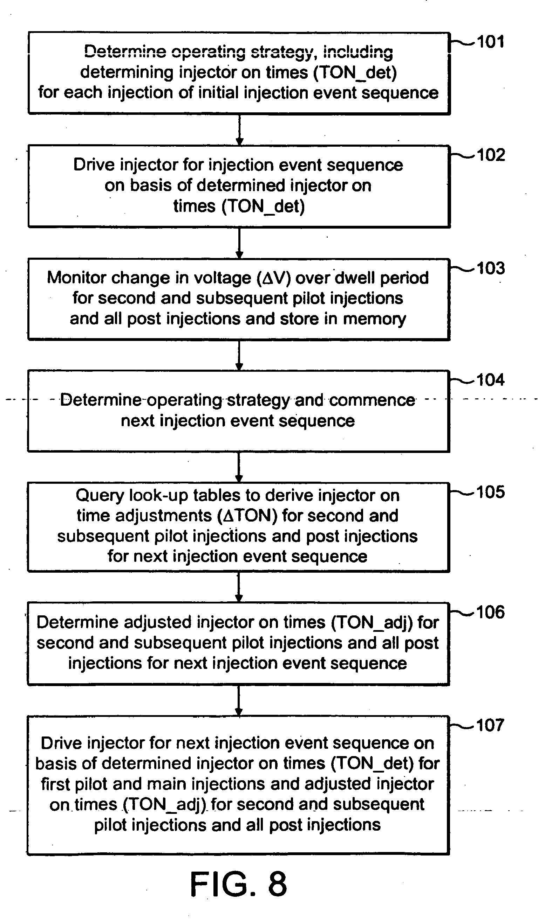

The method of the invention is further described with reference to the flow chart of Figure 8.

As shown, at step 101 the engine control unit selects an operating strategy depending on fuel pressure, engine demand, and engine temperature. This is achieved using look up tables or data maps that are populated with information derived from a graph like that shown in Figure 1. Depending on the selected operating strategy, an initial injection event sequence (injector drive waveform) is determined, including determining (i) the number and timing of injections within the injection event, and (ii) a predetermined injector on time, TON_det, for each injection within the injection event. Typically the injection event includes one, two or more pilot injections, a main injection and one, two or more post injections.

In step 102, for each injection within the selected injection event, the engine control unit drives the injector for the opening phase of the predetermined injector on time, TON_det.

In step 103, the engine control unit monitors the change in voltage, ΔV, that occurs during the dwell periods, $t_{dwell}$, of the second and subsequent pilot injections (if any) and all of the post injections (if any), and records these values in its memory.

Once the initial injection event sequence has completed, at step 104 the operating strategy is again determined and the next injection event sequence is initiated. Assuming a steady state condition (i.e. the operating strategy has not changed), the next injection event sequence will be equivalent to the initial injection event sequence of step 101.

At step 105, the engine control unit uses the measured values for ΔV, as recorded in step 103, to determine a required change in injector on time, ΔTON, for each of the second and subsequent pilot injections and all of the post injections of the next injection sequence, by reference to predetermined look-up tables or data maps.

At step 106, the predetermined injector on times, TON_det (i.e. as determined in step 101) are adjusted on the basis of the required change in injector on time, ΔTON (i.e. as determined in step 105). This gives an adjusted injector on time, TON_adj (each comprising an opening phase and a dwell phase) for each of the second and subsequent pilot injections and all of the post injections, as necessary. Essentially, this step applies a correction factor to the injector on time, so that when the corrected injector on time is applied to the next injection event sequence the required volume of fuel delivery is achieved.

Despite correcting the injector on time, the discharge current level remains unchanged and the dwell time remains unchanged. The opening phase is adjusted, however, so that the amount of charge transferred from the stack is adjusted. For an increase in the injector on time, the amount of charge transferred from the stack will increase so that the actuator stack is extended further and, hence, the injector valve needle is lifted higher.

At step 107 the injector is driven for the opening phases of the injector on times using the predetermined injector in times, TON_det (as determined in step 101) for the first pilot injection, P1, and the main injection (i.e. these injector on times are not corrected). However, for the second and subsequent pilot injections and all of the post injections, the injector is driven for the opening phases of the adjusted injector on times, TON_adj, as determined in step 105.

Steps 104, 105, 106 and 107 continue for as long as the injection event sequence remains the same (i.e. the operating strategy remains in a steady state condition), so that the adjusted injector on times continue to be applied to the second and subsequent pilot injections and all of the post injections.

If a new operating strategy is determined, the method returns to step 101. Again, steps 104, 105, 106 and 107 will be repeated for as long as the injection event sequence remains unchanged (i.e. the new operating strategy remains the same).

By the aforedescribed method, the invention provides a closed loop system that compensates for possible errors in fuel delivery that occur between adjacent injection event sequences. It will be appreciated that

It is to be noted that, in the embodiment described previously, the engine control unit only monitors those injections that follow a preceding injection have a comparable or larger injected fuel volume as it is only those injections for which the aforementioned pressure wave effects and needle lift variations are significant. In a variation to this embodiment, however, all injections of the initial injection event sequence may be monitored in step 103, even if they return a nil value for ΔV. For each injection in the next injection event sequence for the same operating strategy, regardless of its delivery volume and position within the sequence, an adjusted injector on time TON_adj may therefore be determined, even if the data map has returned a nil value for ΔTON.

In the method described, the injector is driven by driving a selected current into or out of the piezoelectric stack for a predetermined period of time, in order to transfer a demanded amount of charge to/from the piezoelectric actuator. This has the effect of varying the voltage across the stack and is referred to as a "charge control" method. However, the invention is equally applicable to a method in which the injector is driven by controlling directly the voltage across the piezoelectric stack, targeting a demanded voltage and measuring the voltage across the piezoelectric stack in a "voltage control" method.

In another embodiment of the invention to that described previously, an alternative injection control parameter may be adjusted in response to the measured change in voltage, ∆V, in order to ensure a consistent fuel delivery volume. By way of example, instead of adjusting the injector on time, TON, the level of current that is driven through the injector may be adjusted, depending on the measured change in voltage, ∆V. As the injector on time TON remains unchanged, the opening phase and the dwell time remain unchanged and, as the current level is adjusted, the amount of charge transferred from the stack during the discharge phase of a second (and subsequent) injection will also be adjusted.

In a still further alternative embodiment, the dwell time of the injection event is adjusted for a second (and subsequent) injection in response to the measured change in voltage, ∆V, but the injector on time, TON, and the discharge current level remain unchanged. In this case the amount of charge that is transferred from the stack for the second (and subsequent) injection remains the unchanged so the extent of movement of the actuator remains unchanged and, hence, the lift of the valve needle remains unchanged.

In view of these alternative embodiments, it will be appreciated that it is possible to adjust different injection control parameters in response to the measured change in voltage, ∆V, other than the injector on time, TON, whilst achieving the same benefit.

**Claims**

1. A method for controlling the volume of fuel delivered during an injection by a piezoelectrically actuated fuel injector comprising a stack of piezoelectric elements, the method comprising:

    driving a current through the stack for an injector opening phase to initiate the injection,
    measuring a change in voltage (∆V) across the stack over an injector dwell phase ($t_{dwell}$) during which the injector is injecting, and
    adjusting an injection control parameter (TON) for at least one subsequent injection on the basis of the measured change in voltage (∆V) in order to ensure a correct volume of fuel is delivered during the at least one subsequent injection.

2. The method as claimed in Claim 1, comprising adjusting the injection control parameter (TON) after a preceding injection of comparable or larger injected volume.

3. The method as claimed in Claim 1 or Claim 2, comprising adjusting the injection control parameter (TON) for a second pilot injection (P2) following a first pilot injection (P1) and preceding a main injection (Pmain).

4. The method as claimed in any preceding claim, comprising adjusting the injection control parameter (TON) for a post injection following a main injection (Pmain) or a preceding post injection.

5. The method as claimed in any preceding claim, wherein adjusting the injection control parameter includes applying a correction factor (∆TON) to a predetermined injection control parameter (TON).

6. The method as claimed in Claim 5, further comprising determining the correction factor (∆TON) on the basis of a calculated change in fuel volume delivery (∆del).

7. The method as claimed in Claim 6, further comprising calculating the change in fuel volume delivery (∆del) on the basis of the measured change in voltage (∆V) across the stack.

8. The method as claimed in any preceding claim, further comprising determining an injector on time (TON_det) comprising the opening phase and the dwell phase ($t_{dwell}$), and wherein adjusting the injection control parameter includes adjusting the injector on time (TON) for the at least one subsequent injection on the basis of the measured change in voltage (∆V).

9. The method as claimed in any of Claims 1 to 7, wherein the injection control parameter is the dwell time ($t_{dwell}$).

10. The method as claimed in any of Claims 1 to 7, wherein the injection control parameter is the current that is driven through the stack for the injector opening phase.

11. The method as claimed in any preceding claim, further comprising selecting an operating strategy from a plurality of operating strategies (A, B, C, D, E, F) on the basis of one or more engine operating conditions and performing the steps of any of claims 1 to 10 each time a new operating strategy is selected.

**EP 1 860 312 B1**

**12.** The method as claimed in Claim 11, comprising monitoring the one or more engine operating conditions, and selecting a new operating strategy from the plurality of operating strategies (A, B, C, D, E, F) on the basis of changes in the one or more engine operating conditions.

**13.** The method as claimed in Claim 11 or Claim 12, wherein the one or more engine operating conditions includes at least one of torque, speed and fuel pressure.

**14.** The method as claimed in any preceding claim, wherein driving the injector comprises applying a discharge current to the stack to cause the injection of fuel, and applying a charge current to the stack in order to cease the injection of fuel.

**15.** The method as claimed in any preceding claim, wherein driving the injector comprises applying a charge current to the stack to cause the injection of fuel, and applying a discharge current to the stack in order to cease the injection of fuel.

**16.** A computer program product comprising at least one computer program software portion which, when executed in an executing environment, is operable to implement the method of any of Claims 1 to 15.

**17.** A data storage medium having the or each computer software portion of Claim 16 stored thereon.

**18.** A microcomputer provided with the data storage medium of Claim 17.

**19.** A controller for a stack of a piezoelectric actuator for use in a fuel injector, the controller comprising;

> means for driving a current through the stack for an injector opening phase,
> means for measuring a change in voltage ($\Delta V$) across the stack over a dwell phase ($t_{dwell}$) during which the injector is injecting, and
> means for adjusting an injection control parameter (TON) for at least one subsequent injection on the basis of the measured change in voltage ($\Delta V$) in order to ensure a correct volume of fuel is delivered during the at least one subsequent injection.

**Patentansprüche**

**1.** Verfahren zum Regeln der Kraftstoffmenge, die während einer Einspritzung von einem piezoelektrisch betätigten Kraftstoffeinspritzventil, das einen Stapel piezoelektrischer Elemente umfasst, gefördert wird, wobei das Verfahren Folgendes umfasst:

> Treiben eines Stroms durch den Stapel für eine Einspritzventilöffnungsphase zum Einleiten der Einspritzung,
> Messen einer Änderung der an dem Stapel anliegenden Spannung ($\Delta V$) über eine Einspritzventilverweilphase ($t_{dwell}$), während der das Einspritzventil einspritzt, und
> Einstellen eines Einspritzsteuerparameters (TON) für wenigstens eine nachfolgende Einspritzung auf der Basis der gemessenen Spannungsänderung ($\Delta V$), um sicherzustellen, dass während der wenigstens einen nachfolgenden Einspritzung eine richtige Kraftstoffmenge gefördert wird.

**2.** Verfahren nach Anspruch 1, umfassend das Einstellen des Einspritzsteuerparameters (TON) nach einer vorhergehenden Einspritzung mit vergleichbarer oder größerer Einspritzmenge.

**3.** Verfahren nach Anspruch 1 oder Anspruch 2, umfassend das Einstellen des Einspritzsteuerparameters (TON) für eine zweite Voreinspritzung (P2), die einer ersten Voreinspritzung (P1) folgt und einer Haupteinspritzung (Pmain) vorangeht.

**4.** Verfahren nach einem der vorhergehenden Ansprüche, umfassend das Einstellen des Einspritzsteuerparameters (TON) für eine einer Haupteinspritzung (Pmain) oder einer vorhergehenden Nacheinspritzung folgende Nacheinspritzung.

**5.** Verfahren nach einem der vorhergehenden Ansprüche, bei der das Einstellen des Einspritzsteuerparameters das Anwenden eines Korrekturfaktors ($\Delta$TON) auf einen vorbestimmten Einspritzsteuerparameter (TON) aufweist.

**6.** Verfahren nach Anspruch 5, ferner umfassend das Ermitteln des Korrekturfaktors ($\Delta$TON) auf der Basis einer berechneten Änderung der Kraftstoffmengenförderung ($\Delta$del).

**7.** Verfahren nach Anspruch 6, ferner umfassend das Berechnen der Änderung der Kraftstoffmengenförderung ($\Delta$del) auf der Basis der gemessenen Änderung der an dem Stapel anliegenden Spannung ($\Delta V$).

**8.** Verfahren nach einem der vorhergehenden Ansprüche, ferner umfassend das Ermitteln einer Einspritzventil-Einschaltzeit (TON_det), umfassend die Öffnungsphase und die Verweilphase ($t_{dwell}$), und wobei das Einstellen des Einspritzsteuerparameters das Einstellen der Einspritzventil-Einschaltzeit (TON) für die wenigstens eine nachfolgende Einspritzung auf der Basis der gemessenen Spannungsänderung ($\Delta V$) aufweist.

**9**

**9.** Verfahren nach einem der Ansprüche 1 bis 7, bei dem der Einspritzsteuerparameter die Verweilzeit ($t_{dwell}$) ist.

**10.** Verfahren nach einem der Ansprüche 1 bis 7, bei dem der Einspritzsteuerparameter der Strom ist, der für die Einspritzventilöffnungsphase durch den Stapel getrieben wird.

**11.** Verfahren nach einem der vorhergehenden Ansprüche, ferner umfassend das Auswählen einer Betriebsstrategie aus mehreren Betriebsstrategien (A, B, C, D, E, F) auf der Basis von einer oder mehreren Motorbetriebsbedingungen und Durchführen der Schritte von beliebigen der Ansprüche 1 bis 10 jedesmal, wenn eine neue Betriebsstrategie gewählt wird.

**12.** Verfahren nach Anspruch 11, umfassend das Überwachen der einen oder mehreren Motorbetriebsbedingungen und Auswählen einer neuen Betriebsstrategie aus den mehreren Betriebsstrategien (A, B, C, D, E, F) auf der Basis von Änderungen der einen oder mehreren Motorbetriebsbedingungen.

**13.** Verfahren nach Anspruch 11 oder Anspruch 12, bei dem die eine oder mehreren Motorbetriebsbedingungen wenigstens Drehmoment und/oder Drehzahl und/oder Kraftstoffdruck beinhalten.

**14.** Verfahren nach einem der vorhergehenden Ansprüche, bei dem das Ansteuern des Einspritzventils das Zuführen eines Entladestroms zu dem Stapel, um die Kraftstoffeinspritzung zu verursachen, und das Zuführen eines Ladestroms zu dem Stapel, um die Kraftstoffeinspritzung zu beenden, umfasst.

**15.** Verfahren nach einem der vorhergehenden Ansprüche, bei dem das Ansteuern des Einspritzventils das Zuführen eines Ladestroms zu dem Stapel, um die Kraftstoffeinspritzung zu verursachen, und das Zuführen eines Entladestroms zu dem Stapel, um die Kraftstoffeinspritzung zu beenden, umfasst.

**16.** Computerprogrammprodukt, umfassend wenigstens einen Computerprogramm-Softwareteil, der, wenn er in einer Ausführungsumgebung ausgeführt wird, die Aufgabe hat, das Verfahren nach einem der Ansprüche 1 bis 15 zu implementieren.

**17.** Datenspeicher, in dem der oder jeder Computersoftwareteil nach Anspruch 16 gespeichert ist.

**18.** Mikrocomputer, der mit dem Datenspeicher nach Anspruch 17 versehen ist.

**19.** Steuerung für einen Stapel eines piezoelektrischen Aktors zur Verwendung in einem Kraftstoffeinspritzventil, wobei die Steuerung Folgendes umfasst:

Mittel zum Treiben eines Stroms durch den Stapel für eine Einspritzventilöffnungsphase,
Mittel zum Messen einer Änderung der an dem Stapel anliegenden Spannung ($\Delta V$) über eine Verweilphase ($t_{dwell}$), während der das Einspritzventil einspritzt, und
Mittel zum Einstellen eines Einspritzsteuerparameters (TON) für wenigstens eine nachfolgende Einspritzung auf der Basis der gemessenen Spannungsänderung ($\Delta V$), um sicherzustellen, dass während der wenigstens einen nachfolgenden Einspritzung eine richtige Kraftstoffmenge gefördert wird.

**Revendications**

**1.** Procédé pour commander le volume de carburant fourni pendant une injection par un injecteur de carburant à actionnement piézo-électrique comprenant une pile d'éléments piézo-électriques, le procédé comprenant les étapes consistant à :

faire passer un courant à travers la pile pour une phase d'ouverture d'injecteur afin d'initialiser l'injection,
mesurer un changement de voltage ($\Delta V$) à travers la pile pendant une phase permanente d'injection ($t_{dwell}$) pendant laquelle l'injecteur injecte, et
ajuster un paramètre de commande d'injection (TON) pendant au moins une injection successive sur la base du changement mesuré de voltage ($\Delta V$) afin d'assurer qu'un volume correct de carburant sera fourni pendant ladite au moins une injection successive.

**2.** Procédé selon la revendication 1, comprenant l'opération consistant à ajuster le paramètre de commande d'injection (TON) après une injection précédente avec un volume injecté comparable ou plus élevé.

**3.** Procédé selon la revendication 1 ou 2, comprenant l'opération consistant à ajuster le paramètre de commande d'injection (TON) pendant une seconde injection pilote (P2) suivant une première injection pilote (P1) et précédant une injection principale (Pmain).

**4.** Procédé selon l'une quelconque des revendications précédentes, comprenant l'opération consistant à ajuster le paramètre de commande d'injection (TON) pendant une postinjection suivant une injection principale (Pmain) ou une postinjection précédente.

**5.** Procédé selon l'une quelconque des revendications précédentes, dans lequel l'opération consistant à ajuster le paramètre de commande d'injection inclut d'appliquer un facteur de correction (ΔTON) à un paramètre de commande d'injection prédéterminé (TON).

6. Procédé selon la revendication 5, comprenant en outre l'opération consistant à déterminer le facteur de correction (ΔTON) en se basant sur un changement calculé de volume de carburant fourni (Δdel).

7. Procédé selon la revendication 6, comprenant en outre l'opération consistant à calculer le changement de volume de carburant fourni (Δdel) en se basant sur le changement mesuré de voltage (ΔV) à travers la pile.

8. Procédé selon l'une quelconque des revendications précédentes, comprenant en outre l'opération consistant à déterminer un temps d'ouverture d'injecteur (TON_det) comprenant la phase d'ouverture et la phase permanente (tdwell), et dans lequel l'ajustement du paramètre de commande d'injection inclut d'ajuster le temps d'ouverture d'injecteur (TON) pendant ladite au moins une injection ultérieure en se basant sur le changement mesuré de voltage (ΔV).

9. Procédé selon l'une quelconque des revendications 1 à 7, dans lequel le paramètre de commande d'injection est le temps permanent ($t_{dwell}$).

10. Procédé selon l'une quelconque des revendications 1 à 7, dans lequel le paramètre de commande d'injection est le courant que l'on fait passer à travers la pile pour la phase d'ouverture de l'injecteur.

11. Procédé selon l'une quelconque des revendications précédentes, comprenant en outre l'opération consistant à choisir une stratégie de fonctionnement à partir d'une pluralité de stratégies de fonctionnement (A, B, C, D, E, F) en se basant sur une ou plusieurs conditions de fonctionnement du moteur et en exécutant les étapes de l'une quelconque des revendications 1 à 10 chaque fois qu'une nouvelle stratégie de fonctionnement est choisie.

12. Procédé selon la revendication 11, comprenant l'opération consistant à surveiller lesdites une ou plusieurs conditions de fonctionnement du moteur, et consistant à choisir une nouvelle stratégie de fonctionnement à partir de la pluralité de stratégies de fonctionnement (A, B, C, D, E, F) en se basant sur les changements dans ladite une ou plusieurs conditions de fonctionnement du moteur.

13. Procédé selon la revendication 11 ou 12, dans lequel lesdites une ou plusieurs conditions de fonctionnement du moteur incluent au moins un paramètre parmi le couple, la vitesse, et la pression du carburant.

14. Procédé selon l'une quelconque des revendications précédentes, dans lequel le pilotage de l'injecteur comprend d'appliquer un courant de décharge à la pile pour provoquer l'injection de carburant, et d'appliquer un courant de charge à la pile afin de cesser l'injection de carburant.

15. Procédé selon l'une quelconque des revendications précédentes, dans lequel le pilotage de l'injecteur comprend d'appliquer un courant de charge à la pile pour provoquer l'injection de carburant, et d'appliquer un courant de décharge à la pile afin de cesser l'injection de carburant.

16. Produit de programme d'ordinateur comprenant au moins une partie logicielle formant programme d'ordinateur qui, lorsqu'elle est exécutée dans un environnement d'exécution, a pour fonction de mettre en oeuvre le procédé selon l'une quelconque des revendications 1 à 15.

17. Support de stockage de données portant la ou chaque portion logicielle d'ordinateur selon la revendication 16 stockée sur lui-même.

18. Micro-ordinateur doté du support de stockage de données selon la revendication 17.

19. Contrôleur pour une pile d'actionneurs piézo-électriques destinée à être utilisée dans un injecteur de carburant, le contrôleur comprenant :

des moyens pour faire passer un courant à travers la pile pour une phase d'ouverture de l'injecteur,
des moyens pour mesurer un changement du voltage (ΔV) à travers la pile pendant une phase permanente ($t_{dwell}$) pendant laquelle l'injecteur injecte, et
des moyens pour ajuster un paramètre de commande d'injection (TON) pour au moins une injection ultérieure en se basant sur le changement mesuré de voltage (ΔV) afin d'assurer qu'un volume correct de carburant sera fourni pendant ladite au moins une injection ultérieure.

FIG. 1

EP 1 860 312 B1

FIG. 2a

FIG. 2b

FIG. 2c

$\Delta FDV_{PK\text{-}PK}$

$P_2$

Fuel Delivery Volume

6    6    6

$P_1$

Separation µs (start of pilot 1 to start of pilot 2)

7    7

## FIG. 3

7    7

$V_{rise}$

$\Delta V$

$V_{2\_nominal}$

Separation µs

## FIG. 4

FIG. 5a

FIG. 5b

FIG. 5c

$\Delta$Del $\quad \Delta$Del$= \emptyset \Delta V + \Psi$

1000 bar

$\Delta V_{2\_nominal}$ $\qquad \Delta V$

## FIG. 6

Fuel
Delivered

1800 bar

1000 bar

$\Delta$Del

400 bar

$\overrightarrow{\Delta TON}$ TON

## FIG. 7

Determine operating strategy, including
determining injector on times (TON_det)
for each injection of initial injection event sequence — 101

Drive injector for injection event sequence
on basis of determined injector on
times (TON_det) — 102

Monitor change in voltage (ΔV) over dwell period
for second and subsequent pilot injections
and all post injections and store in memory — 103

Determine operating strategy and commence
next injection event sequence — 104

Query look-up tables to derive injector on
time adjustments (ΔTON) for second and
subsequent pilot injections and post injections
for next injection event sequence — 105

Determine adjusted injector on times (TON_adj) for
second and subsequent pilot injections and all post
injections for next injection event sequence — 106

Drive injector for next injection event sequence on
basis of determined injector on times (TON_det) for
first pilot and main injections and adjusted injector
on times (TON_adj) for second and subsequent
pilot injections and all post injections — 107

# FIG. 8

**EP 1 860 312 B1**

## REFERENCES CITED IN THE DESCRIPTION

### Patent documents cited in the description

- DE 10024662 A
- EP 0995901 A